# EUROPEAN PATENT SPECIFICATION

(11) **EP 1 995 986 B1**
(45) Date of publication and mention of the grant of the patent: **16.09.2009**
(21) Application number: 07110499.6
(22) Date of filing: 18.06.2007
(51) Int. Cl.: H04W 60/00

(54) **Wireless device and method for determining which APN to use**
Drahtlose Vorrichtung und Verfahren zur Bestimmung des zu verwendenden APN
Dispositif sans fil et procédé pour déterminer l'APN à utiliser

(30) Priority: 24.05.2007 US 753378
(43) Date of publication of application: 26.11.2008
(73) Proprietor: Research In Motion Limited, Waterloo, Ontario N2L 3W8 (CA)
(72) Inventor: Cormier, Jean-Philippe, Ottawa Ontario K1S 5T4 (CA); Lepp, James R W., Ottawa, Ontario K1Z 6Y9 (CA); Chaudry, Shahid R., Kanata, Ontario K2W 1E4 (CA); Hossain, Asif, Kanata, Ontario K2K 3H9 (CA); Plestid, Trevor, Ottawa, Ontario K2B 5Z4 (CA); Rao, Padakandla Krishna, Kanata, Ontario K2W 1C4 (CA); Sims, Richard, London, Greater London SW18 2AS (GB); Islam, Khaledul M., Ottawa, Ontario K2K 3N4 (CA); Balasubramaniam, Balarajan, Ottawa, Ontario K2C 4C6 (CA)
(74) Representative: Rickard, David John

(56) References cited:
- WO-A-02/089508
- WO-A-20/06096363
- GB-A- 2 424 543
- US-A1- 2006 003 765
- US-A1- 2007 130 333
- ANONYMOUS: "X.S0034-0 Version 1.0: cdma2000/GPRS Roaming" 3RD GENERATION PARTNERSHIP PROJECT2, 3GPP2 X.S0034-0, [Online] April 2005 (2005-04), XP002459608 Retrieved from the Internet: URL:http://www.3gpp2.org/public_html/specs /X.S0034-0_v1.0_050526.pdf> [retrieved on 2007-11-21]

## Description

To facilitate wider and more flexible roaming capabilities, wireless devices are now being implemented with two or more radios that implement respective different radio access technologies (RATs). A specific combination of radio access technologies that might be included on a wireless device is CDMA (code division multiple access) and GSM (Global System for Mobile communications). A wireless device having more than one radio access technology is referred to herein as a multi-RAT wireless device. A subscriber with such a device will typically have access to services through one or both of the radio access technologies. The particular radio access technologies that will be available vary on a geographical basis, and will be dependent upon the network implementation of a subscriber's home service provider and also on the network implementations of other networks that might provide roaming access. The registration process is quite different for CDMA data connectivity vs. GSM data connectivity.

As a specific example, the current Verizon network provides CDMA coverage in North America, and provides only GSM coverage in Europe through partner carriers there.

For CDMA purposes, wireless devices typically have identity information stored in ROM (read only memory). For GSM purposes, wireless devices are typically equipped with a SIM (subscriber identity module) card that has identity information stored thereon. SIM cards are removable. It is possible for a subscriber to purchase a SIM card from a service provider other than the subscriber's home service provider, and to replace the SIM card provided by the subscriber's home service provider with the purchased SIM card. This can be done for example to allow a subscriber to have a local telephone number or to use local data services. Some users may prefer the convenience of being billed by and using the services of their home CDMA network, while others will prefer to use local services when travelling abroad. This system gives the user that choice by which SIM they place in the device.

GSM+CDMA-capable wireless devices are configured to use one or more different APNs (access point names) when performing access to a network application service provider that provides services such as push e-mail, weather forecasts, or financial market information. Use of an APN typically involves activating a PDP context with the APN. This information is stored in a database on the device called the registration host routing table. For a device that is a CDMA-centric device, meaning that its nominal operating mode in its home network is CDMA, one APN is an APN that will be referred to as a CDMA-centric APN. The CDMA-centric APN is used to obtain access to a network application service provider using CDMA registration procedures. This can be done while obtaining network access through a partner GSM network. When a wireless device registers with the network application using that APN, it does so using CDMA parameters stored in ROM. Another APN will be referred to as a GSM-centric APN. When the wireless device registers using the GSM-centric APN through a GSM network that is not a partner GSM network, it does so using GSM parameters and protocols.

Using the two APNs, the wireless devices have the ability to connect to a network application service provider through different paths. The first is to use the CDMA-centric APN that will allow it to communicate directly to the CDMA home network from a network providing roaming access through GSM, and to use CDMA parameters to register with the network application service provider. The second is to use the GSM-centric APN to register with the network application service provider using GSM parameters.

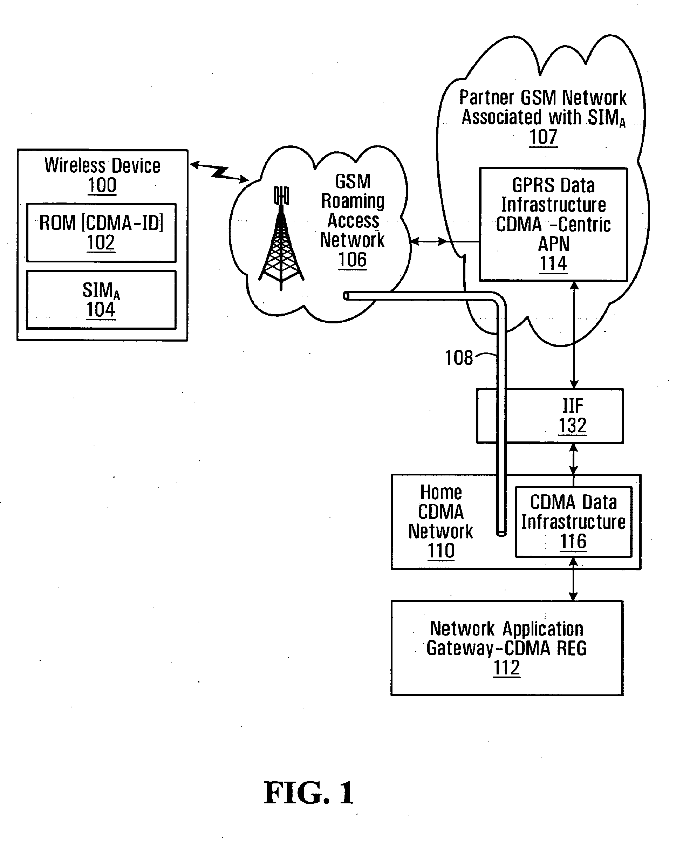

The first approach is illustrated in Figure 1. Shown is a wireless device 100 in communication with a GSM roaming network 106. The wireless device 100 is a CDMA-centric device in the sense that it uses CDMA when it accesses its CDMA home network 110. However, the wireless device 100 is also equipped with GSM capability for use when in a location that does not have a CDMA network. Also shown is a partner GSM network 107, an interworking and interoperability function (IIF) 132 connecting the partner GSM network 107 to the device's home CDMA network 110, and a network application gateway 112. The partner GSM network 107 has GPRS data infrastructure 114, this for example being the GGSN (Gateway GPRS Support Node) of the GSM network 107, that is associated with the CDMA-centric APN. The IIF 132 performs signalling and/or protocol conversions between the GSM 107 and the home CDMA network 110. Therefore, during data flow it can be seen that there is GPRS data in the GSM network 107 while there is CDMA data infrastructure 116 in the home CDMA network 110. The network application gateway 112 has a CDMA-centric role in dealing with CDMA-centric wireless devices such as wireless device 100. The wireless device 100 has a ROM (read only memory) 102 or other storage containing CDMA identification parameters, and has a SIM card SIM_{A} 104 containing GSM identification parameters associated with the partner GSM network 107. SIM_{A} is provided to the subscriber by the subscriber's home network provider and is configured to allow the subscriber to be able to use its partner GSM network. The partner GSM network 107 may be part of an overall set of networks of the same operator as the home CDMA network 110, or it may be operated by a different operator altogether. In practice, the home network provider usually obtains the SIM_{A} from the partner network and provides this to the subscriber. Partner GSM network 107 will recognize registration attempts by the wireless device using the CDMA-centric APN, but will not recognize registration attempts by the wireless device using the GSM-centric APN. More specifically, from the perspective of partner GSM network 107, the wireless device has a subscription to the CDMA-centric APN but not necessarily to the GSM-centric APN.

In operation, at the instant depicted, the access network 106 that is providing coverage to the wireless device 100 in its current location is a GSM roaming access network, meaning it is a GSM network, but it is not the device's home network, nor is it a partner GSM network to the device's home CDMA network 110. The wireless device 100 connects to the partner GSM network 107 through the GSM roaming network 106 using the information stored on the SIM_{A} 104. In order to access the network application gateway 112, a tunnel 108 from the wireless device 100 is created through the access network 106 and the partner GSM network 107 to the wireless device's CDMA home network 124. This is done using the CDMA-centric APN 114. From the perspective of the partner GSM network 107, the wireless device 100 has a subscription to the CDMA-centric APN. The home network 110 forwards data to and from the network application gateway 112. For the example of Figure 1, even though the device is connecting to a GSM access network 106, the wireless device 100 performs registration with the network application gateway using CDMA identification parameters which were stored in ROM 102. Note that should the wireless device attempt to register using the GSM-centric APN, the attempt will fail. The process of connecting through a GSM access network using CDMA parameters is described in the specification 3GPP2 X.S0034-0).

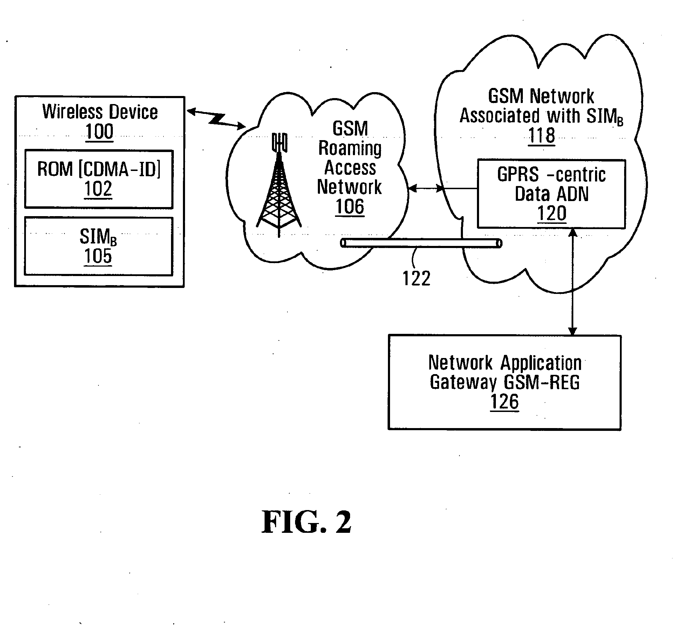

The second approach is illustrated in Figure 2. Shown is the wireless device 100 (the same device as in Figure 1) in communication with a GSM access network 106. Also shown is a GSM network 118 that is not a partner network to the user's home CDMA network 110 of Figure 1. The GSM network 118 is shown in communication with network application gateway 126. It is assumed that network application gateway 126 of Figure 2 and network application gateway 112 of Figure 1 are both being used to connect to the same network application, but the gateway of Figure 1 does so using CDMA parameters, whereas the gateway of Figure 2 does so using GSM parameters. That is to say, for the purpose of interacting with wireless stations performing access through a GSM-centric APN, the network application gateway 126 is assumed to be GSM-centric. The wireless device 110 has ROM 102 containing CDMA parameters, and has SIM card SIM_{B} 105 containing GSM parameters that differ from those on SIM card SIM_{A} 104. More specifically, the GSM parameters are associated with the GSM network 118 as opposed to the partner GSM network 107 of Figure 1. This presupposes that SIM_{A} of Figure 1 has been replaced with SIM_{B} of Figure 2. The GSM network 118 will recognize registration attempts by the wireless device 100 using the GSM-centric APN, but will not recognize registration attempts by the wireless device using the CDMA-centric APN. More specifically, from the perspective of GSM network 118, the wireless device 100 has a subscription to the GSM-centric APN but not to the CDMA-centric APN.

In operation, at the instant depicted, the access network 106 that is providing coverage to the wireless device 100 in its current location is a GSM roaming access network, meaning it is a GSM network, but it is not the device's home network. The wireless device 100 connects to the GSM network 118 using the parameters stored on SIM_{B} 105. In addition, in order to access data services, a tunnel 122 from the wireless device 100 is created through the access network 106 to GSM network 118 using the GSM-centric APN. The GSM network 118 recognizes the wireless device has a subscription to the GSM-centric APN. The GSM network 118 forwards data to and from the network application gateway 126. For the example of Figure 2, the wireless device 100 performs registration with the network application gateway 126 using GSM identification parameters stored on SIM card SIM_{B} 105. Note that should the wireless device attempt to register using the CDMA-centric APN, the attempt will fail.

GB-A-2424543 discloses a telecommunications system comprising a roaming mobile applications server responsive to a register message from a mobile user equipment to determine whether the access point name used to communicate the register message corresponds with a preferred access point name for the mobile user equipment. If the name does not correspond the server sends a re-register message providing the preferred access point name to the mobile user equipment.

WO02/089508A discloses a communication method and apparatus in which load-related information is transmitted between network entities handling connections or calls to allow load balancing. When a request to register by a mobile station using an APN is rejected, a serving support node selects an alternative APN and sends the selected alternative APN to the mobile station in a message. The mobile station then attempts to register using the alternative APN that it has been sent.

### General

One broad aspect may provide a method in a wireless device having a plurality of wireless access radios, each associated with a respective radio access technology, the method comprising: attempting to register with a network application service provider using a first APN of a plurality of APNs; in the event of a failure of the attempt to register using the first APN, receiving a critical cause code indicating failure of the attempt; and upon receipt of a critical cause code indicating failure of the attempt to register using the first APN, attempting to register with a network application service provider using another APN of the plurality of APNs; wherein the first APN of the plurality of APNs is one of a CDMA-centric APN, that is an APN that uses CDMA registration procedures, and a GSM-centric APN, that is an APN that uses GSM registration procedures, and the another APN of the plurality of APNs is the other of the CDMA-centric APN and the GSM-centric APN.

Another broad aspect may provide a wireless device comprising: a plurality of wireless access radios each associated with a respective radio access technology; a function performing mobile discovery of an active data subscription and thereby determine an APN to use by: attempting to register with a network application service provider using a first APN of a plurality of APNs; in the event of a failure of the attempt to register using the first APN, receiving a critical cause code indicating failure of the attempt; and upon receipt of a critical cause code indicating failure of the attempt to register using the first APN, attempting to register with a network application service provider using the another of the plurality of APNs; wherein the first APN of the plurality of APNs is one of a CDMA-centric APN, that is an APN that uses CDMA registration procedures, and a GSM-centric APN, that is an APN that uses GSM registration procedures, and the another APN of the plurality of APNs is the other of the CDMA-centric APN and the GSM-centric APN.

Another broad aspect may provide a computer readable medium storing computer executable instructions executable by a processor of a computing device to clause said device to implement the above method.

### Brief Description of the Drawings

Embodiments will now be described with reference to the attached drawings in which:
Figure 1 is a block diagram of a network showing access to a network application gateway using a CDMA-centric APN;
Figure 2 is a block diagram of a network showing access to a network application gateway using a GSM-centric APN;
Figure 3 is a flowchart of a first method of establishing a PDP context;
Figure 4 is a flowchart of a second method of establishing a PDP context;
Figure 5 is a flowchart of a method of maintaining an identification of a correct APN to use while data roaming is disabled;
Figures 6 and 7 are block diagrams of wireless devices;
Figure 8 is a flowchart of another method of establishing a PDP context; and
Figure 9 is a flowchart of another method of establishing a PDP context.

### Description of Preferred Embodiments

When a wireless device is on a partner GSM network, the wireless device will use the CDMA-centric APN since it is a CDMA-centric device. However, when the user of the wireless device purchases another SIM card, for example while traveling, the operator that provided that SIM card can assign the wireless device to the GSM-centric APN. SIM cards do not include a mechanism for specifying what APN the wireless device is subscribed to. When the wireless device sees that it is attached to a GSM network and knows that it is roaming, it does not know whether its home network is a CDMA network or a GSM network. It has two identities, a GSM identity and a CDMA identity. When it registers with the network application gateway it must use the identity which is associated with its home network in order to receive the correct services that have been provisioned based on its identity on its home network.

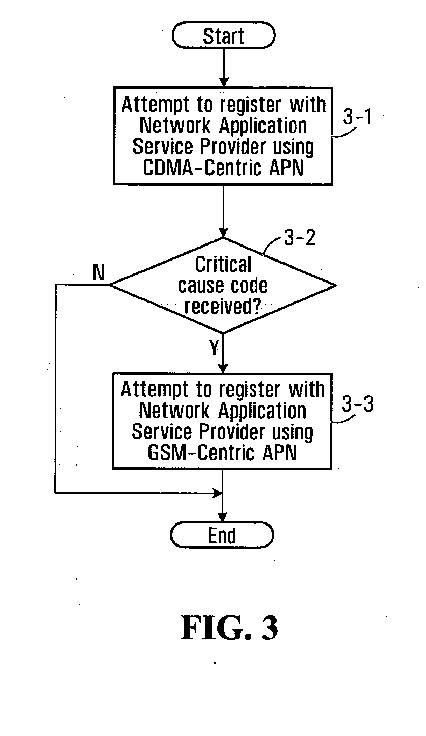

Referring to Figure 3, shown is a flowchart of a first method of performing mobile discovery of an active data subscription. The method begins at step 3-1 with an attempt by a wireless device to register with a network application service provider using the wireless device's CDMA-centric APN that might for example be stored in the Host Routing Table on the device. At step 3-2, if no critical cause code is received (for example the context is established successfully, or fails with a non-critical cause code), then the method ends. On the other hand, if at step 3-2, a critical cause code is received (yes path), then at step 3-3 the wireless device attempts to register with the network application service provider using the wireless device's GSM-centric APN.

Examples of critical cause codes that can be used to determine that the attempt to register failed include:
27 - Unknown or missing APN;
30 - Activation rejected by GGSN;
33 - Requested service option not subscribed.

See for example "3^{rd} Generation Partnership Project 2 3GPP2", 3GPP2 X.S0034-0, Version 1.0, April 2005.

More generally, after attempting to register context in step 3-1, any feedback from the network that can be used by the wireless device to determine that the attempt failed can be used to trigger the subsequent attempt using the other APN in step 3-3.

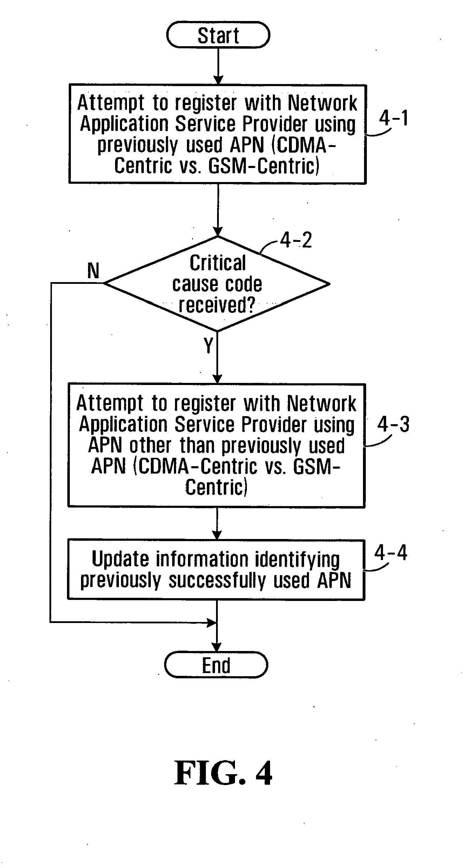

The method of Figure 3 may be implemented when the wireless device is powered on and/or when a new SIM card is installed in the wireless device. The Figure 3 embodiment assumes that the first APN that is attempted is the CDMA-centric APN, and this is followed by an attempt using the GSM-centric APN. In another embodiment (not shown), the first APN is one of the CDMA-centric APN and the GSM-centric APN, and the second APN is the other of the CDMA-centric APN and the GSM-centric APN. Note that the first APN that is attempted is implementation specific. The embodiment of Figure 4 described below is a specific case of this where the first APN attempted is a previously successfully used APN.

Referring to Figure 4, shown is a flowchart of a another method of performing mobile discovery of an active data subscription. The method begins at step 4-1 with an attempt by a wireless device to register with the network application service provider using the previously successfully used APN. The previously successfully used APN may for example be stored in non-volatile memory. This may be the CDMA-centric APN or the GSM-centric APN. At step 4-2, if no critical cause code (or other implementation specific feedback) is received (no path), then the method ends. On the other hand, if at step 4-2, a critical cause code (or other implementation specific feedback) is received (yes path), then at step 4-3 the wireless device attempts to register with the network application service provider using the APN that is other than the previously successfully used APN. Assuming this is successful, at step 4-4 the wireless device updates the information in non-volatile memory that identifies the previously successfully used APN.

The method of Figure 4 may be implemented when the wireless device is powered on.

In some embodiments, wireless devices are equipped with the capability to restrict/disable data roaming. This can be used to disable data roaming while in a geographical area associated with very high cost for example. This can take the form of a feature selected through a graphical user interface on a wireless device for example. It can be referred to as a data roaming guard. While the data roaming guard is on, data roaming is disabled, whereas while the data roaming guard is not on, data roaming is enabled. Another embodiment provides a mechanism of maintaining knowledge of the correct APN to use notwithstanding whether the data roaming guard is on. In the event the user turns the data roaming guard off, the wireless device will then immediately know the correct APN to use, and delays in accessing the network may be reduced.

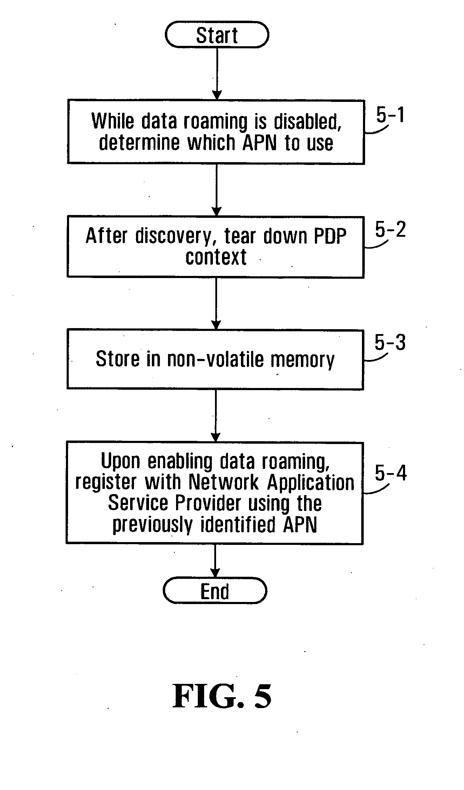

Referring to Figure 5, the method begins at step 5-1 with determining which APN to use while the data roaming is disabled. This can be done, for example using one of the methods of Figure 3 and 4, but without sending any data, thereby minimizing cost to the subscriber. This may result in the establishment of a PDP context using the APN. At step 5-2, after discovering correct APN, the PDP context thus established may be torn down. At step 5-3, the APN thus identified is stored in non-volatile memory. Steps 5-1, 5-2 and 5-3 are repeated each time the wireless device powers up and/or each time the SIM card is changed. At step 5-4, upon enabling data roaming, registration is attempted using the previously identified APN that is stored in non-volatile memory.

The embodiments described have focussed on applications where there are two APNs, referred to as so-called the GSM-centric APN and the CDMA-centric APN. Methods and devices have been described for selecting which of these to use. In another embodiment, similar methods and devices are provided that have the more general application of selecting which one of a set of a least two APNs to use, the at least two APNs not necessarily being or including the GSM-centric APN and/or the CDMA-centric APN.

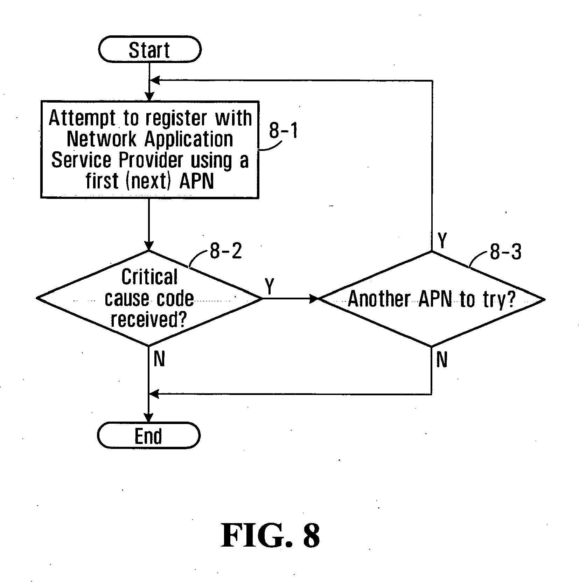

Referring to Figure 8, shown is a flowchart of such a method of performing mobile discovery of an active data subscription. The method begins at step 8-1 with an attempt by a wireless device to register with a network application service provider using a first APN that might for example be stored in the Host Routing Table on the device. At step 8-2, if no critical cause code is received (for example the context is established successfully, or fails with a non-critical cause code), then the method ends. On the other hand, if at step 8-2, a critical cause code is received (yes path), then if there is another APN to try (yes path step 8-3) then the method returns to step 8-1 for the wireless device to attempt to register with the network application service provider using a next APN. The loop of steps 8-1,8-2,8-3 is repeated until either success is achieved, or there are no other APNs to try.

More generally, after attempting to register context in step 8-1, any feedback from the network that can be used by the wireless device to determine that the attempt failed can be used to trigger the subsequent attempt using the other APN.

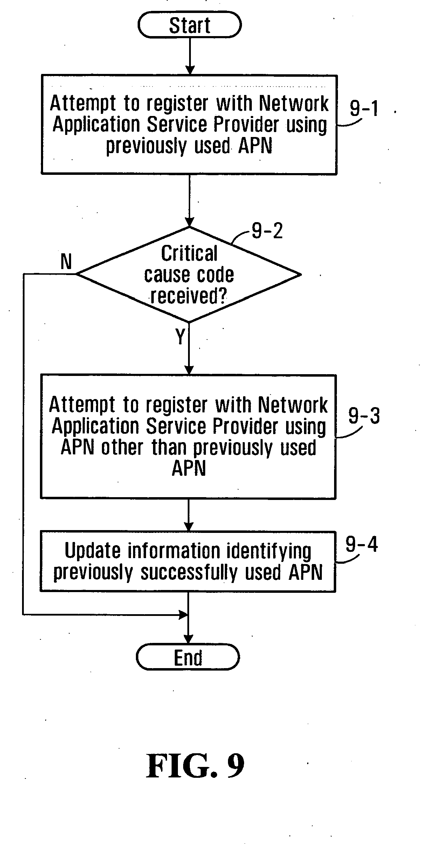

Referring to Figure 9, shown is a flowchart of another method of performing mobile discovery of an active data subscription. The method begins at step 9-1 with an attempt by a wireless device to register with the network application service provider using the previously successfully used APN. The previously successfully used APN may for example be stored in non-volatile memory. At step 9-2, if no critical cause code (or other implementation specific feedback) is received (no path), then the method ends. On the other hand, if at step 9-2, a critical cause code (or other implementation specific feedback) is received (yes path), then at step 9-3 the wireless device attempts to register with the network application service provider using the APN that is other than the previously successfully used APN. Assuming this is successful, at step 9-4 the wireless device updates the information in non-volatile memory that identifies the previously successfully used APN. There may be additional iterations of steps 9-2 and 9-3 until success is achieved, or there are no more APNs to try.

The method of Figure 5 can also be applied in this more general context. In this case, the so-called "previously identified APN" is simply any one of the multiple APNs available to the wireless device that was previously identified as being appropriate to use.

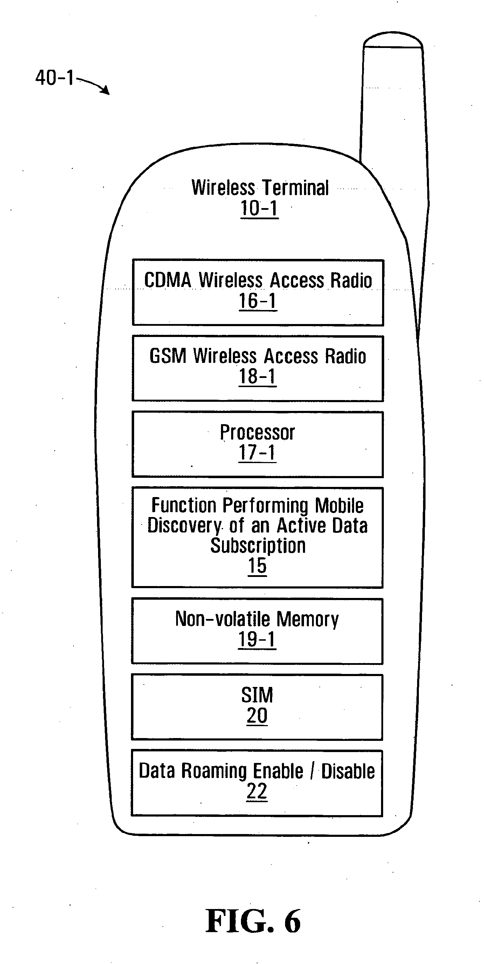

Referring now to Figure 6, shown is a block diagram of a wireless device 10-1 that can implement one or more of the previously described methods. The wireless device 10-1 has a CDMA wireless access radio 16-1, a GSM wireless access radio 18-1, a processor 17-1, and a function performing mobile discovery of an active data subscription 15. More generally, the wireless device has a plurality of wireless access radios, each implementing a respective radio access technology. GSM and CDMA are but two specific examples. The wireless device 10-1 also has a non-volatile memory, SIM 20, and data roaming enable/disable mechanism 22. The wireless device 10-1 may have other components, but they are not shown for sake of simplicity. More generally, in place of SIM 20, any smart card containing a subscriber identity application and/or subscriber identity parameters can be employed.

In operation, the function 15 in the wireless device 10-1 coordinates determination of the active data subscription, by determining a current APN to use for the device. This can be done using any of the methods described above. The function 15 may be implemented in software, hardware, firmware, or a combination of software, hardware and firmware. Non-volatile memory 19-1 can be used to store CDMA parameters; it can also be used to store a previously successfully used APN. SIM 20 stores GSM parameters. The data roaming enable/disable mechanism 22 allows a subscriber to selectively enable or disable data roaming. While data roaming is disabled, there is no data communications to/from the device.

Another broad aspect provides a computer readable medium having instructions stored thereon for implementing function 15, and more generally for implementing any of the methods described herein. Of course the computer readable medium may not be capable of completely executing the method on its own, since interaction with other components on the wireless device such as the radios, antenna(s) etc. is necessary. In such a case, the instructions on the computer readable medium are still driving the method.

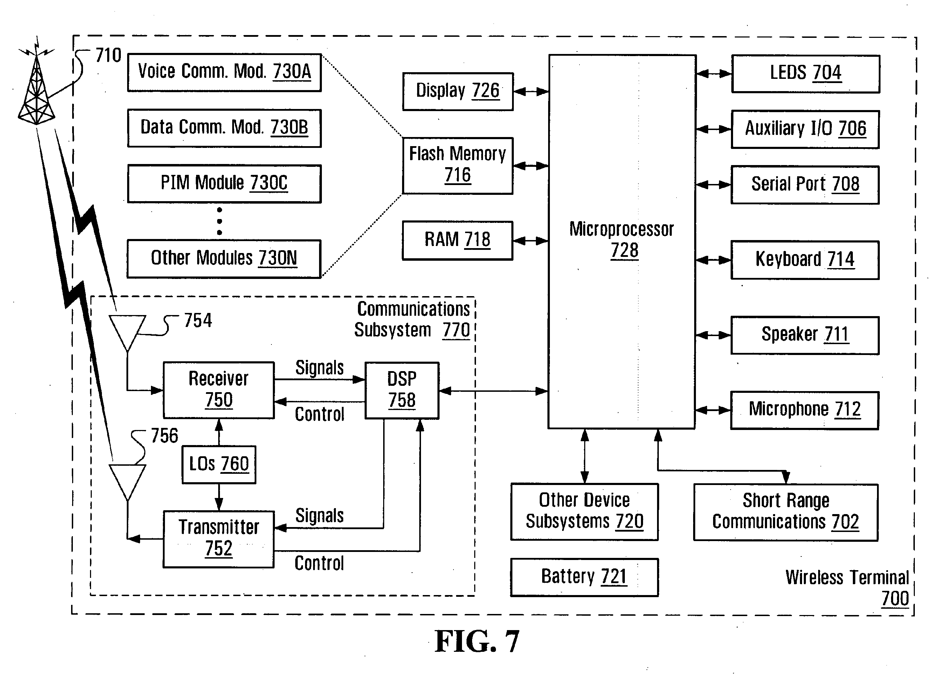

Referring now to Fig. 7, shown is a block diagram of another wireless device 700 that may implement one or more of the previously described methods. It is to be understood that the wireless device 700 is shown with very specific details for example purposes only.

A processing device (a microprocessor 728) is shown schematically as coupled between a keyboard 714 and a display 726. The microprocessor 728 controls operation of the display 726, as well as overall operation of the wireless device 700, in response to actuation of keys on the keyboard 714 by a user.

The wireless device 700 has a housing that may be elongated vertically, or may take on other sizes and shapes (including clamshell housing structures). The keyboard 714 may include a mode selection key, or other hardware or software for switching between text entry and telephony entry.

In addition to the microprocessor 728, other parts of the wireless device 700 are shown schematically. These include: a communications subsystem 770; a short-range communications subsystem 702; the keyboard 714 and the display 726, along with other input/output devices including a set of LEDS 704, a set of auxiliary I/O devices 706, a serial port 708, a speaker 711 and a microphone 712; as well as memory devices including a flash memory 716 and a Random Access Memory (RAM) 718; and various other device subsystems 720. The wireless device 700 may have a battery 721 to power the active elements of the wireless device 700. The wireless device 700 is in some embodiments a two-way radio frequency (RF) communication device having voice and data communication capabilities. In addition, the wireless device 700 in some embodiments has the capability to communicate with other computer systems via the Internet.

Operating system software executed by the microprocessor 728 is in some embodiments stored in a persistent store, such as the flash memory 716, but may be stored in other types of memory devices, such as a read only memory (ROM) or similar storage element. In addition, system software, specific device applications, or parts thereof, may be temporarily loaded into a volatile store, such as the RAM 718. Communication signals received by the wireless device 700 may also be stored to the RAM 718.

The microprocessor 728, in addition to its operating system functions, enables execution of software applications on the wireless device 700. A predetermined set of software applications that control basic device operations, such as a voice communications module 730A and a data communications module 730B, may be installed on the wireless device 700 during manufacture. In addition, a personal information manager (PIM) application module 730C may also be installed on the wireless device 700 during manufacture. The PIM application is in some embodiments capable of organizing and managing data items, such as e-mail, calendar events, voice mails, appointments, and task items. The PIM application is also in some embodiments capable of sending and receiving data items via a wireless network 710. In some embodiments, the data items managed by the PIM application are seamlessly integrated, synchronized and updated via the wireless network 710 with the device user's corresponding data items stored or associated with a host computer system. As well, additional software modules, illustrated as other software module 730N, may be installed during manufacture.

Communication functions, including data and voice communications, are performed through the communication subsystem 770, and possibly through the short-range communications subsystem 702. The communication subsystem 770 includes a receiver 750, a transmitter 752 and one or more antennas, illustrated as a receive antenna 754 and a transmit antenna 756. In addition, the communication subsystem 770 also includes a processing module, such as a digital signal processor (DSP) 758, and local oscillators (LOs) 760. The specific design and implementation of the communication subsystem 770 is dependent upon the communication network in which the wireless device 700 is intended to operate. For example, the communication subsystem 770 of the wireless device 700 may be designed to operate with the Mobitex^{™}, DataTAC^{™} or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, CDMA 1xEuDO, OFDM (orthogonal frequency division multiplexing), Personal Communications Service (PCS), Global System for Mobile Communications (GSM), etc. Other types of data and voice networks, both separate and integrated, may also be utilized with the wireless device 700.

Network access may vary depending upon the type of communication system. For example, in the Mobitex^{™} and DataTAC^{™} networks, wireless devices are registered on the network using a unique Personal Identification Number (PIN) associated with each device. In GPRS networks, however, network access is typically associated with a subscriber or user of a device. A GPRS device therefore typically has a subscriber identity module, commonly referred to as a Subscriber Identity Module (SIM) card, in order to operate on a GPRS network.

When network registration or activation procedures have been completed, the wireless device 700 may send and receive communication signals over the communication network 710. Signals received from the communication network 710 by the receive antenna 754 are routed to the receiver 750, which provides for signal amplification, frequency down conversion, filtering, channel selection, etc., and may also provide analog to digital conversion. Analog-to-digital conversion of the received signal allows the DSP 758 to perform more complex communication functions, such as demodulation and decoding. In a similar manner, signals to be transmitted to the network 710 are processed (e.g., modulated and encoded) by the DSP 758 and are then provided to the transmitter 752 for digital to analog conversion, frequency up conversion, filtering, amplification and transmission to the communication network 710 (or networks) via the transmit antenna 756.

In addition to processing communication signals, the DSP 758 provides for control of the receiver 750 and the transmitter 752. For example, gains applied to communication signals in the receiver 750 and the transmitter 752 may be adaptively controlled through automatic gain control algorithms implemented in the DSP 758.

In a data communication mode, a received signal, such as a text message or web page download, is processed by the communication subsystem 770 and is input to the microprocessor 728. The received signal is then further processed by the microprocessor 728 for an output to the display 726, or alternatively to some other auxiliary I/O devices 706. A device user may also compose data items, such as e-mail messages, using the keyboard 714 and/or some other auxiliary I/O device 706, such as a touchpad, a rocker switch, a thumb-wheel, or some other type of input device. The composed data items may then be transmitted over the communication network 710 via the communication subsystem 770.

In a voice communication mode, overall operation of the device is substantially similar to the data communication mode, except that received signals are output to a speaker 711, and signals for transmission are generated by a microphone 712. Alternative voice or audio I/O subsystems, such as a voice message recording subsystem, may also be implemented on the wireless device 700. In addition, the display 726 may also be utilized in voice communication mode, for example, to display the identity of a calling party, the duration of a voice call, or other voice call related information.

The short-range communications subsystem 702 enables communication between the wireless device 700 and other proximate systems or devices, which need not necessarily be similar devices. For example, the short-range communications subsystem may include an infrared device and associated circuits and components, or a Bluetooth^{™} communication module to provide for communication with similarly-enabled systems and devices.

In Figure 7, microprocessor 728, RAM 718, communication sub-system 770, display 726, flash memory 716, voice module and data module can cooperate to implement one or more of the methods described herein. More generally, the implementation particulars will depend on a given wireless device configuration.

Numerous modifications and variations of the present invention are possible in light of the above teachings. It is therefore to be understood that within the scope of the appended claims, the invention may be practiced otherwise than as specifically described herein.

## Claims

1. A method in a wireless device (100) having a plurality of wireless access radios, each associated with a respective radio access technology, the method comprising:
attempting (8-1) to register with a network application service provider using a first Access Point Name, APN, of a plurality of APNs;
in the event of a failure of the attempt to register using the first APN, receiving (8-2) a critical cause code indicating failure of the attempt; and
**characterised in that** upon receipt of a critical cause code indicating failure of the attempt to register using the first APN, attempting (8-3) to register with a network application service provider using another APN of the plurality of APNs,
wherein the first APN of the plurality of APNs is one of a CDMA-centric APN, that is an APN that uses CDMA registration procedures, and a GSM-centric APN, that is an APN that uses GSM registration procedures, and the another APN of the plurality of APNs is the other of the CDMA-centric APN and the GSM-centric APN.

2. The method of claim 1 wherein attempting (8-1) to register with the network service provider using the first APN is always performed (3-1) using the CDMA-centric APN.

3. The method of claim 2 further comprising executing the method each time the wireless device (100) is powered on and/or each time a smart card (104) containing a subscriber identity application and/or subscriber identity parameters is changed in the wireless device (100).

4. The method of claim 1 further comprising:
storing (4-4) information identifying a previously successfully used APN;
wherein attempting (8-1) to register with the network service provider using the first APN is always performed (4-1) using the previously successfully used APN.

5. The method of claim 4 further comprising executing the method each time the wireless device (100) is powered on.

6. The method of claim 1 wherein receiving (8-2) the critical cause code comprises receiving one of:
27 - Unknown or missing APN;
30 - Activation rejected by GGSN; and
33 - Requested service option not subscribed.

7. A method comprising:
while data roaming is disabled, performing (5-1) the method of any preceding claim;
storing (5-3) information identifying one of the plurality of APNs as a successfully used APN in non-volatile memory; and
upon enabling data roaming, using (5-4) the APN identified by the stored information.

8. The method of claim 7 further comprising tearing (5-2) down a PDP context that was established while data roaming is disabled.

9. The method of claim 7 or claim 8 wherein while data roaming is disabled no data is transmitted.

10. A wireless device (10-1) comprising:
a plurality of wireless access radios (16-1,18-1) each associated with a respective radio access technology;
a function (15) performing mobile discovery of an active data subscription and thereby determine an APN to use by:
attempting (8-1) to register with a network application service provider using a first APN of a plurality of APNs;
in the event of a failure of the attempt to register using the first APN, receiving (8-2) a critical cause code indicating failure of the attempt; and
**characterised in that** upon receipt of a critical cause code indicating failure of the attempt to register using the first APN, attempting (8-3) to register with a network application service provider using the another of the plurality of APNs;
wherein the first APN of the plurality of APNs is one of a CDMA-centric APN, that is an APN that uses CDMA registration procedures, and a GSM-centric APN, that is an APN that uses GSM registration procedures, and the another APN of the plurality of APNs is the other of the CDMA-centric APN and the GSM-centric APN.

11. The wireless device (10-1) of claim 10 wherein the plurality of wireless access radios (16-1,18-1) comprise a CDMA wireless access radio (16-1) and a GSM wireless access radio (18-1), the wireless device (10-1) further comprising a smart card (20) containing a subscriber identity application and/or subscriber identity parameters.

12. The wireless device (10-1) of claim 10 that determines an APN to use each time the wireless device (10-1) is powered on and/or each time a smart card (20) containing a subscriber identity application and/or subscriber identity parameters is changed in the wireless device (10-1).

13. The wireless device (10-1) of claim 10 or claim 11 further comprising:
a non-volatile memory (19-1);
wherein the function (15) performing mobile discovery of an active data subscription stores information identifying a previously successfully used APN in the non-volatile memory (19-1);
wherein the function (15) performing mobile discovery of the active data subscription attempting to register with the network application service provider is configured always to use the previously successfully used APN as the first APN.

14. The wireless device (10-1) of claim 13 that determines an APN to use each time the wireless device (10-1) is powered on.

15. The wireless device (10-1) of claim 10 wherein the critical cause code is one of:
27 - Unknown or missing APN;
30 - Activation rejected by GGSN; and
33 - Requested service option not subscribed.

16. The wireless device (10-1) of any of claims 10 to 15 further comprising:
a data roam enable/disable mechanism (22) allowing a user to selectively enable and disable data roaming;
the function (15) performing mobile discovery of the active data subscription determining (5-1) the APN to use while data roaming is disabled and storing (5-3) information identifying one of the plurality of APNs as a successfully used APN in non-volatile memory (19-1);
wherein upon enabling data roaming, the wireless device (10-1) uses the APN identified by the non-volatile memory (19-1).

17. The wireless device (10-1) of claim 16 wherein the wireless device (10-1) tears (5-2) down a PDP context that was established while data roaming is disabled.

18. The wireless device (10-1) of claim 16 or claim 17
wherein while data roaming is disabled no data is transmitted.

19. A computer readable medium (15) storing computer readable instructions executable by a processor of a computing device to cause said device to implement the method of any of claims 1 to 9.

## Patentansprüche

1. Verfahren in einer drahtlosen Vorrichtung (100) mit einer Vielzahl von drahtlosen Zugriffsfunkgeräten, die jeweils zu einer entsprechenden Funkzugriffstechnologie gehören, wobei das Verfahren Folgendes umfasst:
Versuch (8-1) einer Registrierung bei einem Netzwerkanwendungsdienstanbieter unter Verwendung eines ersten Zugriffspunktnamens APN einer Vielzahl von APNs;
im Fall, dass der Versuch zur Registrierung unter Verwendung des ersten APN fehlschlägt, Empfangen (8-2) eines Code der kritischen Ursache, der das Fehlschlagen des Versuchs anzeigt; und
**dadurch gekennzeichnet, dass** bei Empfang eines Code der kritischen Ursache, der das Fehlschlagen des Versuchs zur Registrierung unter Verwendung des ersten APN anzeigt, eine Registrierung bei einem Netzwerkanwendungsdienstanbieter unter Verwendung eines anderen APN der Vielzahl von APNs versucht wird (8-3),
wobei der erste APN der Vielzahl von APNs entweder ein CDMA-zentrischer APN, das heißt ein APN, der CDMA-Registrierungsverfahren verwendet, oder ein GSM-zentrischer APN ist, das heißt ein APN, der GSM-Registrierungsverfahren verwendet, und der andere APN der Vielzahl von APNs entweder der GSMzentrische APN oder der CDMA-zentrische APN ist.

2. Verfahren nach Anspruch 1, wobei der Versuch (8-1), sich unter Verwendung des ersten APN bei dem Netzwerkdienstanbieter zu registrieren, stets unter Verwendung des CDMA-zentrischen APN ausgeführt (3-1) wird.

3. Verfahren nach Anspruch 2, das des Weiteren umfasst, dass das Verfahren jedes Mal ausgeführt wird, wenn die drahtlose Vorrichtung (100) eingeschaltet wird, und/oder jedes Mal, wenn eine Smart-Card (104), die eine
Teilnehmeridentitätsanwendung und/oder Teilnehmeridentitätsparameter enthält, in der drahtlosen Vorrichtung (100) ausgetauscht wird.

4. Verfahren nach Anspruch 1, das des Weiteren Folgendes umfasst:
Speichern (4-4) von Informationen, die einen zuvor erfolgreich verwendeten APN identifizieren;
wobei der Versuch (8-1) einer Registrierung bei dem Netzwerkdienstanbieter unter Verwendung des ersten APN stets unter Verwendung des zuvor erfolgreich verwendeten APN ausgeführt (4-1) wird.

5. Verfahren nach Anspruch 4, das des Weiteren umfasst, dass das Verfahren jedes Mal ausgeführt wird, wenn die drahtlose Vorrichtung (100) eingeschaltet wird.

6. Verfahren nach Anspruch 1, wobei der Empfang (8-2) des Code der kritischen Ursache den Empfang eins der Folgenden umfasst:
27 - unbekannter oder fehlender APN;
30 - Aktivierung durch GGSN verweigert; und
33 - Geforderte Dienstoption nicht abonniert.

7. Verfahren, das Folgendes umfasst:
während Daten-Roaming deaktiviert ist, Ausführen (5-1) des Verfahrens nach einem der vorhergehenden Ansprüche;
Speichern (5-3) von Informationen, die einen der Vielzahl von APNs als einen erfolgreich verwendeten APN im nicht-flüchtigen Speicher identifizieren; und
bei Aktivieren von Daten-Roaming Verwenden (5-4) des APNs, der mit Hilfe der gespeicherten Informationen identifiziert wurde.

8. Verfahren nach Anspruch 7, das des Weiteren die Eliminierung (5-2) eines PDP-Kontextes umfasst, der während einer Deaktivierung des Daten-Roaming eingerichtet wurde.

9. Verfahren nach Anspruch 7 oder Anspruch 8, wobei während einer Deaktivierung von Daten-Roaming keine Daten übertragen werden.

10. Drahtlose Vorrichtung (10-1), die Folgendes umfasst:
eine Vielzahl von drahtlosen Zugriffsfunkgeräten (16-1, 18-1), die jeweils zu einer entsprechenden Funkzugriffstechnologie gehören;
eine Funktion (15) zur Durchführung einer mobilen Entdeckung eines aktiven Datenabonnements und **dadurch** Festlegung eines APN zur Verwendung, indem:
eine Registrierung bei einem Netzwerkanwendungsdienstanbieter unter Verwendung eines ersten APN einer Vielzahl von APNs versucht wird (8-1);
im Fall, dass der Versuch zur Registrierung unter Verwendung des ersten APN fehlschlägt, ein Code der kritischen Ursache, der das Fehlschlagen des Versuchs anzeigt; empfangen wird (8-2); und
**dadurch gekennzeichnet, dass** bei Empfang eines Code der kritischen Ursache, der das Fehlschlagen des Versuchs zur Registrierung unter Verwendung des ersten APN anzeigt, eine Registrierung bei einem Netzwerkanwendungsdienstanbieter unter Verwendung des anderen APN der Vielzahl von APNs versucht wird (8-3),
wobei der erste APN der Vielzahl von APNs entweder ein CDMA-zentrischer APN, das heißt ein APN, der CDMA-Registrierungsverfahren verwendet, oder ein GSM-zentrischer APN ist, das heißt ein APN, der GSM-Registrierungsverfahren verwendet, und der andere APN der Vielzahl von APNs entweder der GSMzentrische APN oder der CDMA-zentrische APN ist.

11. Drahtlose Vorrichtung (10-1) nach Anspruch 10, wobei die Vielzahl von
drahtlosen Zugriffsfunkgeräten (16-1, 18-1) ein drahtloses CDMA-Zugriffsfunkgerät (16-1) und ein drahtloses GSM-Zugriffsfunkgerät (18-1) umfasst,
wobei die drahtlose Vorrichtung (10-1) des Weiteren eine Smart-Card (20) umfasst, die eine Teilnehmeridentitätsanwendung und/oder Teilnehmeridentitätsparameter enthält.

12. Drahtlose Vorrichtung (10-1) nach Anspruch 10, die einen APN bestimmt, der jedes Mal, wenn die drahtlose Vorrichtung (10-1) eingeschaltet wird, und/oder jedes Mal, wenn eine Smart-Card (20), die eine Teilnehmeridentitätsanwendung und/oder Teilnehmeridentitätsparameter enthält, in der drahtlosen Vorrichtung (10-1) ausgetauscht wird, zu benutzen ist.

13. Drahtlose Vorrichtung (10-1) nach Anspruch 10 oder Anspruch 11, die des Weiteren Folgendes umfasst:
einen nicht-flüchtigen Speicher (19-1);
wobei die Funktion (15), die die mobile Entdeckung eines aktiven Datenabonnements ausführt, Informationen speichert, die einen zuvor erfolgreich verwendeten APN in dem nicht-flüchtigen Speicher (19-1) identifizieren;
wobei die Funktion (15), die die mobile Entdeckung des aktiven Datenabonnements ausführt, die versucht, sich bei dem Netzwerkanwendungsdienstanbieter anzumelden, stets für die Verwendung des zuvor erfolgreich verwendeten APN als erstem APN konfiguriert ist.

14. Drahtlose Vorrichtung (10-1) nach Anspruch 13, die einen APN bestimmt, der jedes Mal zu verwenden ist, wenn die drahtlose Vorrichtung (10-1) eingeschaltet wird.

15. Drahtlose Vorrichtung (10-1) nach Anspruch 10, wobei der Code der kritischen Ursache eins der Folgenden ist:
27 - unbekannter oder fehlender APN;
30 - Aktivierung durch GGSN verweigert; und
33 - Geforderte Dienstoption nicht abonniert.

16. Drahtlose Vorrichtung (10-1) nach einem der Ansprüche 10 bis 15, die des Weiteren Folgendes umfasst:
einen Daten-Roaming-Aktivierungs-/Deaktivierungsmechanismus (22), der einem Benutzer ermöglicht, Daten-Roaming selektiv zu aktivieren und deaktivieren;
die Funktion (15), die die mobile Entdeckung des aktiven Datenabonnements ausführt, die den APN bestimmt (5-1), der zu verwenden ist, während das Daten-Roaming deaktiviert ist, und Informationen speichert (5-3), die einen der Vielzahl von APNs als einen im nicht-flüchtigen Speicher (19-1) erfolgreich verwendeten APN identifzieren;
wobei die drahtlose Vorrichtung (10-1) beim Aktivieren des Daten-Roaming den APN verwendet, der von dem nicht-flüchtigen Speicher (19-1) identifiziert worden ist.

17. Drahtlose Vorrichtung (10-1) nach Anspruch 16, wobei die drahtlose Vorrichtung (10-1) einen PDP-Kontext eliminiert (5-2), der eingerichtet wurde, während das Daten-Roaming deaktiviert war.

18. Drahtlose Vorrichtung (10-1) nach Anspruch 16 oder Anspruch 17, wobei keine Daten übertragen werden, während Daten-Roaming deaktiviert ist.

19. Computerlesbares Medium (15), das computerlesbare Anweisungen speichert, die von einem Prozessor einer Computervorrichtung ausgeführt werden können, um die Vorrichtung zu veranlassen, das Verfahren nach einem der Ansprüche 1 bis 9 zu implementieren.

## Revendications

1. Un procédé dans un dispositif sans fil (100) ayant une pluralité de radios d'accès sans fil, chacune associée à une technologie d'accès radio respective, le procédé comportant :
tenter (8-1) de s'enregistrer auprès d'un fournisseur de services d'applications réseau en utilisant un premier nom de d'accès, APN, d'une pluralité d'APN ;
dans l'éventualité d'un échec de la tentative de s'enregistrer en utilisant le premier APN, recevoir (8-2) un code de cause critique indiquant l'échec de la tentative ; et
**caractérisé en ce qu'**à réception d'un code de cause critique indiquant l'échec de la tentative de s'enregistrer en utilisant le premier APN, tenter (8-3) de s'enregistrer auprès d'un fournisseur de services d'applications réseau en utilisant un autre APN de la pluralité d'APN,
où le premier APN de la pluralité d'APN est un APN parmi un APN centré CDMA, c'est-à-dire un APN qui utilise des procédures d'enregistrement CDMA, et un APN centré GSM, c'est-à-dire un APN qui utilise des procédures d'enregistrement GSM, et l'autre APN de la pluralité d'APN est l'autre APN parmi l'APN centré CDMA et l'APN centré GSM.

2. Le procédé de la revendication 1 où tenter (8-1) de s'enregistrer auprès du fournisseur de services réseau en utilisant le premier APN est toujours réalisé (3-1) en utilisant l'APN centré CDMA.

3. Le procédé de la revendication 2 comportant de plus exécuter le procédé chaque fois que le dispositif sans fil (100) est allumé et/ou chaque fois qu'une carte intelligente (104) contenant une application d'identité d'abonné et/ou des paramètres d'identité d'abonné est changée dans le dispositif sans fil (100).

4. Le procédé de la revendication 1 comportant de plus :
stocker (4-4) des informations identifiant un APN précédemment utilisé avec succès ;
où tenter (8-1) de s'enregistrer auprès du fournisseur de services réseau en utilisant le premier APN est toujours réalisé (4-1) en utilisant l'APN précédemment utilisé avec succès.

5. Le procédé de la revendication 4 comportant de plus exécuter le procédé chaque fois que le dispositif sans fil (100) est allumé.

6. Le procédé de la revendication 1 où recevoir (8-2) le code de cause critique comporte recevoir un élément parmi :
27 - APN inconnu ou manquant ;
30 - Activation rejetée par le GGSN ; et
33 - Non abonné à l'option de service demandée.

7. Un procédé comportant :
pendant que l'itinérance de données (« *data roaming* ») est désactivée, réaliser (5-1) le procédé de n'importe quelle revendication précédente ;
stocker (5-3) des informations identifiant un APN de la pluralité d'APN comme APN utilisé avec succès dans une mémoire non volatile ; et
à l'activation de l'itinérance de données, utiliser (5-4) l'APN identifié par les informations stockées.

8. Le procédé de la revendication 7 comportant de plus démonter (5-2) un contexte PDP qui a été établi pendant que l'itinérance de données était désactivée.

9. Le procédé de la revendication 7 ou de la revendication 8 où pendant que l'itinérance de données est désactivée aucune donnée n'est transmise.

10. Un dispositif sans fil (10-1) comportant :
une pluralité de radios d'accès sans fil (16-1, 18-1) chacune associée à une technologie d'accès radio respective ;
une fonction (15) réalisant une découverte mobile d'un abonnement données actif et déterminant ainsi un APN à utiliser en :
tentant (8-1) de s'enregistrer auprès d'un fournisseur de services d'applications réseau en utilisant un premier APN d'une pluralité d'APN ;
dans l'éventualité d'un échec de la tentative de s'enregistrer en utilisant le premier APN, en recevant (8-2) un code de cause critique indiquant l'échec de la tentative ; et
**caractérisé en ce qu'**à réception d'un code de cause critique indiquant l'échec de la tentative de s'enregistrer en utilisant le premier APN, en tentant (8-3) de s'enregistrer auprès d'un fournisseur de services d'applications réseau en utilisant l'autre APN de la pluralité d'APN ;
où le premier APN de la pluralité d'APN est un APN parmi un APN centré CDMA, c'est-à-dire un APN qui utilise des procédures d'enregistrement CDMA, et un APN centré GSM, c'est-à-dire un APN qui utilise des procédures d'enregistrement GSM, et l'autre APN de la pluralité d'APN est l'autre APN parmi l'APN centré CDMA et l'APN centré GSM.

11. Le dispositif sans fil (10-1) de la revendication 10 où la pluralité de radios d'accès sans fil (16-1, 18-1) comporte une radio d'accès sans fil CDMA (16-1) et une radio d'accès sans fil GSM (18-1), le dispositif sans fil (10-1) comportant de plus une carte intelligente (20) contenant une application d'identité d'abonné et/ou des paramètres d'identité d'abonné.

12. Le dispositif sans fil (10-1) de la revendication 10 qui détermine un APN à utiliser chaque fois que le dispositif sans fil (10-1) est allumé et/ou chaque fois qu'une carte intelligente (20) contenant une application d'identité d'abonné et/ou des paramètres d'identité d'abonné est changée dans le dispositif sans fil (10-1).

13. Le dispositif sans fil (10-1) de la revendication 10 ou de la revendication 11 comportant de plus :
une mémoire non volatile (19-1) ;
où la fonction (15) réalisant la découverte mobile d'un abonnement données actif stocke des informations identifiant un APN précédemment utilisé avec succès dans la mémoire non volatile (19-1) ;
où la fonction (15) réalisant la découverte mobile de l'abonnement données actif tentant de s'enregistrer auprès du fournisseur de services d'applications réseau est configurée pour toujours utiliser l'APN précédemment utilisé avec succès comme premier APN.

14. Le dispositif sans fil (10-1) de la revendication 13 qui détermine un APN à utiliser chaque fois que le dispositif sans fil (10-1) est allumé.

15. Le dispositif sans fil (10-1) de la revendication 10 où le code de cause critique est un élément parmi :
27 - APN inconnu ou manquant ;
30 - Activation rejetée par le GGSN ; et
33 - Non abonné à l'option de service demandée.

16. Le dispositif sans fil (10-1) de n'importe laquelle des revendications 10 à 15 comportant de plus :
un mécanisme d'activation/de désactivation d'itinérance de données (22) permettant à un utilisateur d'activer et de désactiver de façon sélective l'itinérance de données ;
la fonction (15) réalisant la découverte mobile de l'abonnement données actif déterminant (5-1) l'APN à utiliser pendant que l'itinérance de données est désactivée et stockant (5-3) des informations identifiant un APN de la pluralité d'APN comme APN utilisé avec succès dans la mémoire non volatile (19-1) ;
où à l'activation de l'itinérance de données, le dispositif sans fil (10-1) utilise l'APN identifié par la mémoire non volatile (19-1).

17. Le dispositif sans fil (10-1) de la revendication 16 où le dispositif sans fil (10-1) démonte (5-2) un contexte PDP qui a été établi pendant que l'itinérance de données était désactivée.

18. Le dispositif sans fil (10-1) de la revendication 16 ou de la revendication 17
où pendant que l'itinérance de données est désactivée aucune donnée n'est transmise.

19. Un support lisible par ordinateur (15) stockant des instructions lisibles par ordinateur exécutables par un processeur d'un dispositif informatique pour amener ledit dispositif à implémenter le procédé de n'importe laquelle des revendications 1 à 9.
